# EUROPÄISCHE PATENTSCHRIFT

(11) **EP 4 126 617 B1**
(45) Veröffentlichungstag und Bekanntmachung des Hinweises auf die Patenterteilung: **29.05.2024**
(21) Anmeldenummer: 21714619.0
(22) Anmeldetag: 24.03.2021
(51) Int. Cl.: B60W 60/00

(54) **VERFAHREN ZUR STEUERUNG EINES ZUMINDEST TEILWEISE AUTONOM FAHRENDEN EIGENFAHRZEUGES**
METHOD FOR CONTROLLING AN AT LEAST PARTIALLY AUTONOMOUSLY DRIVING EGO VEHICLE
PROCÉDÉ DE COMMANDE D'UN VÉHICULE EGO À CONDUITE AU MOINS PARTIELLEMENT AUTONOME

(30) Priorität: 25.03.2020 AT 502472020
(43) Veröffentlichungstag der Anmeldung: 08.02.2023
(73) Patentinhaber: AVL List GmbH, 8020 Graz (AT)
(72) Erfinder: HAYDL, Andreas, 8521 Wettmannstätten (AT)
(74) Vertreter: Babeluk, Michael
(86) Internationale Anmeldenummer: PCT/AT2021/060097
(87) Internationale Veröffentlichungsnummer: WO 2021/189090

(56) Entgegenhaltungen:
- WO-A1-2018/100164
- US-A1- 2008 201 050
- US-A1- 2015 360 721
- US-A1- 2019 300 053

## Beschreibung

Die Erfindung betrifft ein Verfahren zur Steuerung eines zumindest teilweise autonom fahrenden Eigenfahrzeuges, wobei durch Sensoren zumindest die Umgebung, gesetzliche Fahrbedingungen und der Verkehr vor dem Eigenfahrzeug in einer aktuellen Fahrspur erkannt werden. Außerdem betrifft die Erfindung ein dazugehöriges Fahrzeug zur Durchführung des Verfahrens.

In der DE 10 2014 200 896 A1 ist ein Fahrassistenzsystem zum Spurwechsel beim Einfädeln in eine Fahrspur angegeben. Dabei wird durch Sensoren ein Partnerfahrzeug erkannt, von dem angenommen wird, dass es Rücksicht auf das eigene Fahrzeug nimmt. Diese Rücksichtnahme, der Bremsvorgang des Partnerfahrzeuges oder ein Spurwechselvorgang dieses Fahrzeuges zum Freimachen der gewünschten Spur für den eigenen Spurwechselvorgang wird für diesen Spurwechselvorgang mit einbezogen. Es wird dabei die benötigte Beschleunigung berechnet und eingestellt, oder aber das Fahrzeug mit konstanter Geschwindigkeit weiter betrieben, wenn ein Spurwechsel nicht möglich ist.

Diese Berücksichtigung der Handlungen der anderen Verkehrsteilnehmer hinsichtlich des Spurwechsels ist jedoch gefährlich und kann vermehrt zu Unfällen führen, denn nicht jeder Verkehrsteilnehmer fährt unter Inanspruchnahme seiner gesamten verfügbaren Konzentration. Die steigende Anzahl der Möglichkeiten zur Ablenkung im Fahrzeug führen immer häufiger zu gefährlichen Verkehrssituationen. Vor allem die Fahrt auf einer Autobahn lädt zum Abschweifen der Aufmerksamkeit weg vom Straßenverkehr zum Mobiltelefon und Ähnlichem ein. Zwar ist die Nutzung von Mobiltelefonen während des Lenkens eines Fahrzeuges verboten, doch die Unfallsstatistiken sprechen eine andere Geschichte.

Durch die mögliche Ablenkung sieht der Lenker des Partnerfahrzeuges das auf die Autobahn auffahrende oder auf der rechten Fahrspur fahrende Eigenfahrzeug nicht. Durch die Steuerung wird nun jedoch beschleunigt und der Spurwechselvorgang eingeleitet. Das Partnerfahrzeug bremst nun jedoch nicht ab und eine Kollision kann nicht mehr verhindert werden.

Aus der US 2015/0360721 A ist ein Verfahren zur Steuerung eines Fahrzeugs bekannt, bei dem es primär darum geht, einen sicheren Spurwechsel durchzuführen, um ein Überholmanöver autonom zu ermöglichen. Bei der vorliegenden Erfindung geht es jedoch darum, die Fahrgeschwindigkeit auf der eigenen Fahrspur entsprechend anzupassen.

Aufgabe der vorliegenden Erfindung ist es, ein verbessertes Verfahren und ein dazugehöriges verbessertes Eigenfahrzeug anzugeben.

Dies wird von dem obigen Verfahren erfindungsgemäß dadurch gelöst, dass eine erste Abfrage über eine mögliche Geschwindigkeit bei Beibehaltung der aktuellen Fahrspur durchgeführt wird. Wenn erkannt wird, dass die mögliche Geschwindigkeit größer ist als die aktuelle Geschwindigkeit wird eine Zielbeschleunigung berechnet. Außerdem wird eine zweite Abfrage durchgeführt, ob sich auf einer benachbarten Fahrspur in einem Beobachtungsbereich ein Fahrzeug befindet, ob entweder eine Beschleunigung mit der errechneten Zielbeschleunigung durchgeführt wird, da kein Fahrzeug im Beobachtungsbereich erkannt wurde oder ob keine Beschleunigung mit der Zielbeschleunigung durchgeführt wird, da ein Fahrzeug im Beobachtungsbereich erkannt wurde.

Die mögliche Geschwindigkeit ergibt sich dabei beispielsweise aus Faktoren wie der Fahrbahnbeschaffenheit, der gesetzlich erlaubten maximalen Geschwindigkeit und/oder dem Fahrbahnverlauf. So ist bei einer vorteilhaften Ausgestaltung der Erfindung beispielsweise bei Serpentinenfahrt nicht die gesetzlich erlaubte Höchstgeschwindigkeit für die Fahrt von Landstraßen die mögliche Geschwindigkeit, sondern eine herabgesetzte Geschwindigkeit, die Fahrstabilität und hohe Sicherheit gewährleistet.

Unter einem Beobachtungsbereich versteht sich hier ein Bereich, der sich in Fahrtrichtung links oder rechts des Eigenfahrzeuges befindet. Dabei wird ein Bereich links oder rechts vor dem Eigenfahrzeug und/oder ein Bereich links oder rechts nach dem Eigenfahrzeug mit umfasst. Der Beobachtungsbereich ist jener Bereich, der von Sensoren des Eigenfahrzeuges zur Durchführung des erfindungsgemäßen Verfahrens aufgenommen wird.

Diese Sensoren dienen zum Erkennen eines Fahrzeuges auf einer benachbarten Fahrspur. Die Alternativen links und rechts in Fahrtrichtung vom Eigenfahrzeug werden deshalb unterschieden, da gesetzliche Vorgaben bestehen, die eine Beschleunigung des Eigenfahrzeuges bei einem Überholvorgang durch ein Partnerfahrzeug verbieten. Dabei wird unter einem Überholvorgang in Österreich beispielsweise das Vorbeifahren an einem langsameren Fahrzeug links von dem langsameren Fahrzeug verstanden. Dies gilt daher vor allem in Ländern mit Rechtsverkehr. In Ländern mit Linksverkehr ist der umgekehrte Fall anzuwenden.

Durch Sensoren wird die Umgebung, die gesetzlichen Fahrbedingungen und/oder der Verkehr vor dem Eigenfahrzeug in einer aktuellen Fahrspur erkannt und bei der ersten Abfrage aufgenommen. Dabei werden beispielsweise Geschwindigkeitsbegrenzungen und die höchst zulässige Geschwindigkeit registriert und in einem Speicher abgelegt. Mit diesen im Speicher abgelegten Daten wird durch eine Recheneinheit bestimmt, was die höchste zulässige Geschwindigkeit ist. Aufgrund des Aussehens des Straßenverlaufs kann zusätzlich bestimmt werden, welche Geschwindigkeit zur Einhaltung der gebotenen Sicherheit möglich wäre. Weiters wird beobachtet, ob ein Verkehrsteilnehmer in der aktuellen Fahrspur unmittelbar vor dem Eigenfahrzeug langsamer oder schneller ist als das Eigenfahrzeug. Dadurch wird in der ersten Abfrage ermittelt, ob die Erhöhung der Geschwindigkeit bei Beibehaltung der aktuellen Fahrspur möglich ist und anschließend die Zielbeschleunigung berechnet wird, wenn erkannt wird, dass die mögliche Geschwindigkeit größer ist als die aktuelle Geschwindigkeit.

Mit der zweiten Abfrage wird festgestellt, ob sich auf einer benachbarten Fahrspur in dem Beobachtungsbereich ein Fahrzeug befindet. Dazu wird die Aufnahme des Beobachtungsbereichs durch die Sensoren ausgewertet und entschieden, ob im Beobachtungsbereich ein Fahrzeug vorhanden ist. Wenn die Frage nach dem Fahrzeug in der benachbarten Fahrspur im Beobachtungsbereich von der Recheneinheit bejaht wird, dann wird zur Hebung der Verkehrssicherheit keine Beschleunigung trotz möglicher größerer Geschwindigkeit durchgeführt. Durch diese Maßnahme kann ein Überholvorgang eines Fahrzeuges auf einer benachbarten Fahrspur schneller abgeschlossen werden. Dadurch werden außerdem Zeiten des Aufenthalts im toten Winkel verringert. Dies kann vor allem für Fahrer von kleineren Fahrzeugen lebensrettend sein, wie zum Beispiel für Motorradfahrer.

Wenn bei der zweiten Abfrage kein Fahrzeug im Beobachtungsbereich erkannt wird, ist ein sicheres Beschleunigen möglich, ohne gefährliche Verkehrssituationen zu beschwören. Daher wird eine Beschleunigung mit der Zielbeschleunigung durchgeführt. Durch dieses Vorgehen wird zusätzlich auch die gesetzliche Vorgabe beispielsweise in der österreichischen Straßenverkehrsordnung befolgt, dass ein Beschleunigen verboten ist, wenn das Eigenfahrzeug gerade von einem anderen Fahrzeug überholt wird.

Es ergibt sich daher erhöhte Sicherheit durch das Verbot der Beschleunigung beim Erkennen eines anderen Fahrzeuges im Beobachtungsbereich. Als weiterer positiver Effekt wird erreicht, dass sich das autonom oder teilweise autonom fahrende Eigenfahrzeug gemäß den geltenden Verkehrsbestimmungen betreiben lässt.

Die erfindungsgemäße Aufgabe wird außerdem durch ein Eigenfahrzeug, das zur Durchführung des obigen Verfahrens geeignet ist und benutzt wird gelöst.

Es ist besonders günstig, wenn der Beobachtungsbereich sich in Fahrtrichtung links oder in Fahrtrichtung rechts mehr als 25 m seitlich entlang des Eigenfahrzeuges erstreckt. Dadurch entsteht der Vorteil, dass ein günstiger Kompromiss zwischen Sicherheit durch eine möglichst großzügige Aufnahme der Umgebung und geringern Speicheraufwand erreicht wird. Außerdem wird der positive Effekt weiter erhöht, wenn sich der Beobachtungsbereich in Fahrtrichtung mehr als 25 m schräg links oder schräg rechts hinter einer Hinterkante des Eigenfahrzeuges erstreckt.

Ebenso ist es vorteilhaft, wenn der Beobachtungsbereich in Fahrtrichtung mehr als 25 m schräg links oder schräg rechts vor einer Vorderkante des Eigenfahrzeuges reicht.

Situationsabhängig optimieren lässt sich das Verhältnis von benötigter Datenmenge zur erreichten Sicherheit, wenn der Beobachtungsbereich ein Bereich ist, der in Fahrtrichtung seitlich links oder seitlich rechts vom Fahrzeug angeordnet ist, wobei die maximalen Erstreckungen des Beobachtungsbereichs abhängig von der erlaubten, der möglichen und/oder der aktuellen Geschwindigkeit und/oder der Geschwindigkeit des Fahrzeugs ist und mit zunehmender Geschwindigkeit größer wird.

Da der Beobachtungsbereich hinter dem Eigenfahrzeug für den Vorgang eines Überholtwerdens des Eigenfahrzeuges besonders wichtig ist, ist es besonders vorteilhaft, wenn die Erstreckung des Beobachtungsbereichs hinter einer Hinterkante des Eigenfahrzeuges von der Differenz von einerseits der Geschwindigkeit des Fahrzeugs und andererseits der möglichen oder der aktuellen Geschwindigkeit des Eigenfahrzeuges abhängig ist und mit zunehmender Differenz größer wird.

Es ist günstig, wenn die zweite Abfrage, ob Fahrzeuge seitlich vorhanden sind, die Aufnahme des Beobachtungsbereichs seitlich des Fahrzeuges von zumindest einem Sensor umfasst. Der Sensor kann dabei separat nur für diesen Zweck vorgesehen sein oder zusätzlich für diese Funktion eingesetzt werden. Der Sensor kann also nur den Beobachtungsbereich detektieren oder auch zusätzlich einen Bereich außerhalb des Beobachtungsbereichs, beispielsweise hinter dem Beobachtungsbereich, um die Position und Geschwindigkeit eines Fahrzeuges zu detektieren, das sich außerhalb des Beobachtungsbereichs befindet. Im Abgleich mit der aktuellen Geschwindigkeit des Eigenfahrzeuges kann so bestimmt werden, ob und in welcher Zeit das sich noch außerhalb des Beobachtungsbereichs befindliche Fahrzeug das Eigenfahrzeug überholen wird und sich damit mit Beginn des Überholvorgangs innerhalb des dynamisch angepassten Beobachtungsbereichs befindet.

Besonders günstig ist dabei, wenn der Sensor mit Ultraschall, mit Radar, mit einer Kameraaufnahme und/oder mit Laserscan den Beobachtungsbereich seitlich des Fahrzeuges aufnimmt. Es hat sich herausgestellt, dass diese verschiedenen Technologien besonders für die Aufnahme der Umgebung im Automobilbau geeignet sind, da der benötigte Bauraum und das Gewicht gering sind und diese Sensoren in der Beschaffung immer günstiger werden.

In einer besonders vorteilhaften Ausbildung des erfindungsgemäßen Verfahrens ist vorgesehen, dass der zumindest eine Sensor Teil eines Spurwechselassistenten ist und vorzugsweise zur ersten Abfrage die Auswertungssoftware des Spurwechselassistenten benutzt wird. Unter einem Spurwechselassistent versteht sich auch der praktisch synonym benutzte Begriff Totwinkelassistent. Der Spurwechselassistent nimmt dazu ebenfalls den Beobachtungsbereich seitlich neben dem Fahrzeug auf und bestimmt, ob im Beobachtungsbereich ein Fahrzeug vorhanden ist. Üblicherweise gibt der Spurwechselassistent eine Warnung bei einem gewünschten Fahrspurwechsel aus, wenn ein Fahrzeug sich im sogenannten toten Winkel auf der gewünschten benachbarten Fahrspur aufhält.

Um ein perfekt an die Umgebungsbedingungen angepasstes Verfahren zu erhalten, ist günstigerweise vorgesehen, dass nach einer bestimmten Zeitspanne die erste Abfrage erneut durchgeführt wird, wobei die bestimmte Zeitspanne insbesondere 100 Millisekunden entspricht.

Alternativ oder zusätzlich kann vorgesehen sein, dass nach einer bestimmten Zeitspanne die zweite Abfrage erneut durchgeführt wird, wobei die bestimmte Zeitspanne insbesondere 100 Millisekunden entspricht.

Um auch ein Überholmanöver für die Passagiere angenehm und sicher zu gestalten ist es vorteilhaft, wenn zumindest ein vorausfahrendes Fahrzeug auf der aktuellen Fahrspur durch Sensoren erkannt und aufgenommen wird und ein Überholmanöver eingeleitet wird und eine Zielbeschleunigung zur Durchführung des Überholmanövers berechnet wird.

Dazu ist es günstig, wenn Überholverbote erkannt und im Speicher hinterlegt werden und die Steuerung demgemäß agiert.

In Österreich besteht beispielsweise die Ausnahme, dass im Verkehr im Ortsgebiet auch ein Überholen rechts in dem Sinn erlaubt ist, dass die Fahrspur frei gewählt werden darf, wenn zumindest zwei getrennte Fahrspuren in die gleiche Fahrtrichtung vorhanden sind. Daher ist es günstig, dass das Fahrzeug zwischen Ortsgebiet und Freiland unterscheidet und auch die vorhandenen Fahrspuren erkennt und die Steuerung entsprechend agiert und ein Beschleunigen zulässt oder verbietet.

Auch eine Unterscheidung zwischen Kolonnenverkehr und ungehindertem Verkehr kann in einer günstigen Variante des Verfahrens vorgesehen sein.

In weiterer Folge wird die Erfindung anhand der nicht einschränkenden Figuren näher erläutert. Es zeigen:
- Fig. 1: eine Skizze eines erfindungsgemäßen Eigenfahrzeuges im Straßenverkehr in einer ersten Situation;
- Fig. 2: eine Skizze des erfindungsgemäßen Eigenfahrzeuges im Straßenverkehr in einer zweiten Situation;
- Fig. 3: ein schematischer Ablauf einer ersten Ausführung eines erfindungsgemäßen Verfahrens; und
- Fig. 4.: ein schematischer Ablauf einer zweiten Ausführung eines erfindungsgemäßen Verfahrens.

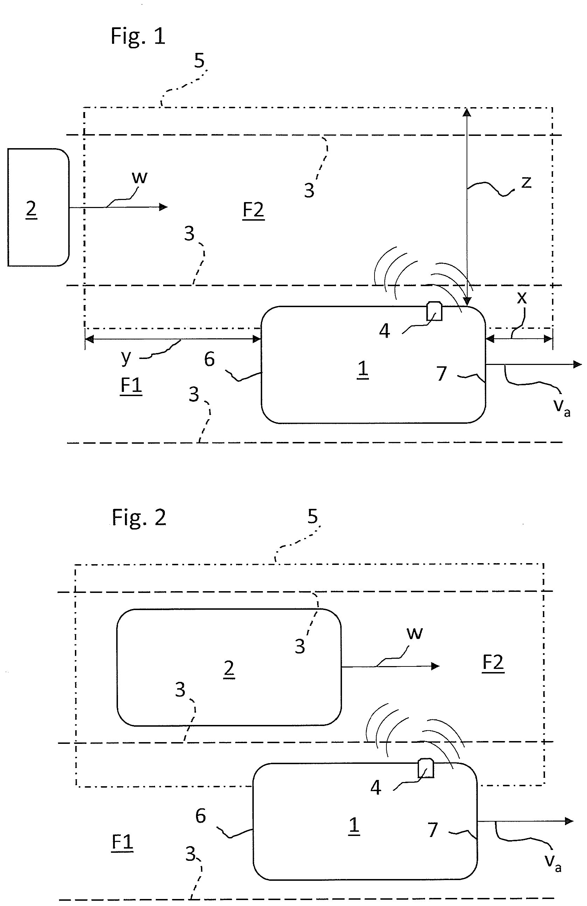

In Fig. 1 ist eine erste Situation unter Anwendung eines erfindungsgemäßen Verfahrens an einem Eigenfahrzeug 1 gezeigt. Dabei ist ein Eigenfahrzeug 1 auf einer aktuellen Fahrspur F1 mit einer aktuellen Geschwindigkeit vₐ unterwegs. Auf einer benachbarten Fahrspur F2 fährt ein Fahrzeug 2 mit einer Geschwindigkeit w. Die beiden Fahrzeuge weisen im gezeigten Moment eine gleiche Fahrtrichtung entlang der Geschwindigkeitsvektoren vₐ und w auf. Zwischen der aktuellen Fahrspur F1 und der benachbarten Fahrspur F2 ist eine Linie 3 zur Abgrenzung angeordnet. Auch zur Abgrenzung der Fahrspuren F1, F2 zur Umgebung sind Linien 3 vorgesehen. Das Fahrzeug 2 bewegt sich auf der benachbarten Fahrspur F2 in Fahrtrichtung links vom Eigenfahrzeug 1. Das Eigenfahrzeug 1 weist zumindest einen Sensor 4 auf, der einen Beobachtungsbereich 5 seitlich neben dem Eigenfahrzeug 1 aufnimmt. In der gezeigten Ausführung befindet sich der Beobachtungsbereich 5 in Fahrtrichtung links neben dem Eigenfahrzeug 1. Der Beobachtungsbereich 5 erstreckt sich hier in Fahrtrichtung links 25 m seitlich entlang des Eigenfahrzeuges 1, wobei in diesem Ausführungsbeispiel die Erstreckung y hinter einer Hinterkante 6 des Eigenfahrzeuges 1 größer ist als die Erstreckung x vor einer Vorderkante 7 des Eigenfahrzeuges 1. In Querrichtung zur Fahrtrichtung erstreckt sich der Beobachtungsbereich 5 über eine Distanz z, die vorzugsweise die benachbarte Fahrspur F2 überragt, also insbesondere das 1,75-Fache der Fahrspurbreite beträgt, wenn der Sensor 4 mittig am Eigenfahrzeug 1 angeordnet ist. Wenn der Sensor 4 seitlich am Eigenfahrzeug 1 angeordnet ist, ist das 1,25-Fache der Fahrspurbreite ausreichend, um sicher zu detektieren, ob sich ein Fahrzeug auf der Fahrspur F2 befindet. In einer vorteilhaften Ausgestaltung erstreckt sich der Beobachtungsbereich 5 in Fahrtrichtung etwa 25 m links hinter einer Hinterkante 6 und etwa 5 m vor einer Vorderkante 7 des Eigenfahrzeuges 1. In einer besonders vorteilhaften Ausgestaltung wird der Beobachtungsbereich 5 dynamisch in Abhängigkeit von der aktuellen Geschwindigkeit vₐ des Eigenfahrzeuges 1, der aktuellen Geschwindigkeit w des Fahrzeuges 2 und/oder einer Differenz der aktuellen Geschwindigkeit w des Fahrzeuges 2 und der aktuellen Geschwindigkeit vₐ des Eigenfahrzeuges 1 gewählt.

In Fig. 1 ist das Fahrzeug 2 außerhalb des Beobachtungsbereichs 5. In Fig. 2 ist im Unterschied dazu eine zweite Situation gezeigt, in der sich das Fahrzeug 2 innerhalb des Beobachtungsbereichs 5 befindet. Das heißt der Sensor 4 des Eigenfahrzeugs 1 nimmt das Fahrzeug 2 wahr. In der ersten Situation gemäß Fig. 1 befindet sich das Fahrzeug 2 ebenfalls in einer Position zum Eigenfahrzeug 1, in der das Eigenfahrzeug 1 die Position und Geschwindigkeit w des Fahrzeuges 2 bestimmen kann, obwohl sich das Fahrzeug 2 außerhalb des erfindungsgemäßen Beobachtungsbereichs 5 befindet. Dies geschieht durch den Sensor 4 oder einen anderen Sensor des Eigenfahrzeuges 1.

Insbesondere stellen die beiden Situationen der Fig. 1 und Fig. 2 zeitlich aufeinanderfolgende Situationen dar. Hierbei ist die Geschwindigkeit des Fahrzeuges 2 größer als die Geschwindigkeit des Eigenfahrzeuges 1, sodass das Fahrzeug 2 von hinten kommend auf das Eigenfahrzeug 1 aufschließt und damit in den Beobachtungsbereich 5 fährt.

Alternativ dazu können sich zwei Situationen ergeben, bei denen der räumliche Abstand in Fahrtrichtung zwischen dem Fahrzeug 2 und dem Eigenfahrzeug 1 unverändert bleibt, aber sich die Geschwindigkeit eines der Fahrzeuge oder von beiden Fahrzeugen so ändert, dass sich der Beobachtungsbereich 5 des erfindungsgemäßen Verfahrens in der zweiten Situation so viel mehr nach hinten erstreckt, dass das Fahrzeug 2 sich nun innerhalb des Beobachtungsbereichs 5 befindet. Zur Bestimmung des Beobachtungsbereichs 5 kann hier insbesondere die Differenz der aktuellen Geschwindigkeit w des Fahrzeuges 2 und der aktuellen Geschwindigkeit vₐ des Eigenfahrzeuges 1 oder die Differenz der aktuellen Geschwindigkeit w des Fahrzeuges 2 und der ermittelten möglichen Geschwindigkeit vₘ des Eigenfahrzeuges 1 herangezogen werden. In beiden Fällen wird der Beobachtungsbereich 5 erfindungsgemäß so bestimmt, dass ein Überholvorgang des Fahrzeuges 2 an dem Eigenfahrzeug 1 detektiert wird und sich das Fahrzeug 2 innerhalb des Beobachtungsbereichs 5, insbesondere innerhalb der Erstreckung y hinter einer Hinterkante 6 des Eigenfahrzeuges 1 befindet. Der Überholvorgang findet auch dann noch statt, wenn sich das Fahrzeug 2 neben dem Eigenfahrzeug 1 oder in der Erstreckung x vor einer Vorderkante 7 des Eigenfahrzeuges 1 befindet, sodass der Beobachtungsbereich 5 erfindungsgemäß so gewählt wird, dass sich das Fahrzeug 2 während des Überholvorgangs innerhalb des Beobachtungsbereichs 5 befindet. Befindet sich also kein Fahrzeug 2 innerhalb des Beobachtungsbereichs 5, so findet aktuell kein Überholvorgang statt. Der Beobachtungsbereich 5 kann somit erfindungsgemäß einerseits statisch mit beispielsweise 25 m hinter einer Hinterkante 6 und 5 m vor einer Vorderkante 7 des Eigenfahrzeuges 1 oder andererseits dynamisch in Abhängigkeit von der aktuellen Geschwindigkeit vₐ des Eigenfahrzeuges 1, der aktuellen Geschwindigkeit w des Fahrzeuges 2 und/oder einer Differenz der aktuellen Geschwindigkeit w des Fahrzeuges 2 und der aktuellen Geschwindigkeit vₐ des Eigenfahrzeuges 1 gewählt werden.

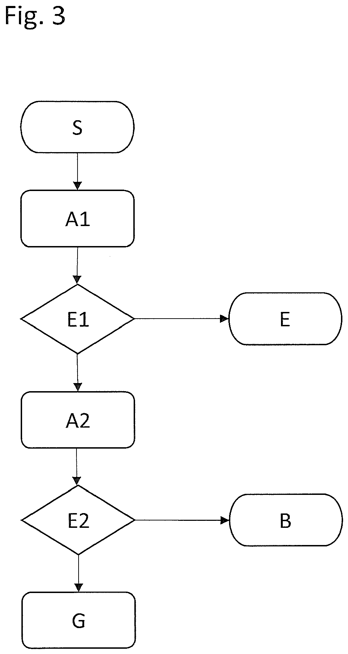

Fig. 3 zeigt einen schematischen Verfahrensablauf. Dabei kennzeichnet S den Start des erfindungsgemäßen Verfahrens. Von den Aufnahmen der Sensoren des Eigenfahrzeuges 1 ist Wissen über die Umgebung des Eigenfahrzeuges 1, insbesondere die Fahrbahnbeschaffenheit, die gesetzlich erlaubte maximale Geschwindigkeit und der Fahrbahnverlauf, die Position und die Geschwindigkeit w des Fahrzeuges 2, sowie die aktuelle Geschwindigkeit vₐ des Eigenfahrzeuges 1 im Speicher hinterlegt. So sind aktuelle Beschränkungen und Verbote sowie die Positionen und Geschwindigkeiten des Fahrzeuges 2 und des Eigenfahrzeuges 1 gespeichert und können für das Verfahren abgerufen werden.

Das Verfahren beginnt mit einer ersten Abfrage A1. Dazu wird eine mögliche Geschwindigkeit vₘ ermittelt. Die mögliche Geschwindigkeit vₘ ist abhängig von den Straßenverhältnissen, den gesetzlichen Möglichkeiten, dem Verkehr vor dem Eigenfahrzeug 1 und möglicherweise vom Wunsch des Fahrers. Nach Bestimmung der möglichen Geschwindigkeit vₘ wird eine erste Entscheidung E1 darüber getroffen, ob die mögliche Geschwindigkeit vₘ größer oder kleiner ist als die aktuelle Geschwindigkeit vₐ. Wenn die aktuelle Geschwindigkeit vₐ kleiner ist, wird mit der ermittelten möglichen Geschwindigkeit vₘ eine Zielbeschleunigung ermittelt und das Verfahren wird fortgeführt mit einer zweiten Abfrage A2.

Wenn die aktuelle Geschwindigkeit vₐ größer ist als die ermittelte mögliche Geschwindigkeit vₘ ist ein Ende E des Verfahrens erreicht.

Bei der zweiten Abfrage A2 wird bestimmt, ob auf einer benachbarten Fahrspur F2 im Beobachtungsbereich 5 ein Fahrzeug 2 vorhanden ist. Es wird eine Entscheidung E2 darüber getroffen und eine Beschleunigung B mit der errechneten Zielbeschleunigung wird durchgeführt, wenn kein Fahrzeug 2 im Beobachtungsbereich 5 erkannt wird und es wird keine Beschleunigung B mit der Zielbeschleunigung durchgeführt, wenn ein Fahrzeug 2 im Beobachtungsbereich 5 erkannt wird. In dem Fall wird die Geschwindigkeit im Schritt G konstant gehalten.

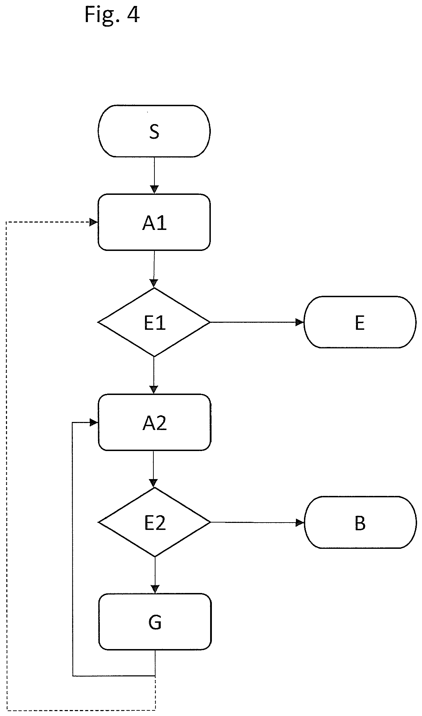

Im Unterschied dazu wird in Fig. 4 das Verfahren nach einer bestimmten Zeitspanne wieder mit der ersten Abfrage A1 oder mit der zweiten Abfrage A2 fortgeführt.

## Patentansprüche

1. Verfahren zur Steuerung eines zumindest teilweise autonom fahrenden Eigenfahrzeuges (1), wobei durch Sensoren (4) zumindest die Umgebung, gesetzliche Fahrbedingungen und der Verkehr vor dem Eigenfahrzeug (1) in einer aktuellen Fahrspur (F1) erkannt werden, **dadurch gekennzeichnet, dass**
a. eine erste Abfrage (A1) über eine mögliche Erhöhung der Geschwindigkeit (vₘ) bei Beibehaltung der aktuellen Fahrspur durchgeführt wird und eine Zielbeschleunigung berechnet wird, wenn erkannt wird, dass die mögliche Geschwindigkeit (vₘ) größer ist als die aktuelle Geschwindigkeit, und
b. eine zweite Abfrage (A2) durchgeführt wird, ob sich auf einer benachbarten Fahrspur (F2) in einem Beobachtungsbereich (5) ein Fahrzeug (2) befindet, ob entweder eine Beschleunigung mit der errechneten Zielbeschleunigung durchgeführt wird, da kein Fahrzeug (2) im Beobachtungsbereich (5) erkannt wurde oder ob keine Beschleunigung mit der Zielbeschleunigung durchgeführt wird, da ein Fahrzeug (2) im Beobachtungsbereich (5) erkannt wurde.

2. Verfahren nach Anspruch 1, **dadurch gekennzeichnet, dass** der Beobachtungsbereich (5) sich in Fahrtrichtung links oder in Fahrtrichtung rechts mehr als 25 m seitlich entlang des Eigenfahrzeuges (1) erstreckt.

3. Verfahren nach Anspruch 1 oder 2, **dadurch gekennzeichnet, dass** sich der Beobachtungsbereich (5) in Fahrtrichtung mehr als 25 m schräg links oder rechts hinter einer Hinterkante (6) des Eigenfahrzeuges (1) erstreckt.

4. Verfahren nach einem der Ansprüche 1 bis 3, **dadurch gekennzeichnet, dass** sich der Beobachtungsbereich (5) in Fahrtrichtung mehr als 25 m schräg links oder rechts vor einer Vorderkante (7) des Eigenfahrzeuges (1) reicht.

5. Verfahren nach einem der Ansprüche 1 bis 4, **dadurch gekennzeichnet, dass** der Beobachtungsbereich (5) ein Bereich ist, der in Fahrtrichtung seitlich links oder rechts vom Eigenfahrzeug (1) angeordnet ist, wobei die maximalen Erstreckungen des Beobachtungsbereichs (5) abhängig von der erlaubten, der möglichen (vₘ) und/oder der aktuellen (vₐ) Geschwindigkeit des Eigenfahrzeuges (1) und/oder der Geschwindigkeit (w) des Fahrzeugs (2) ist und mit zunehmender Geschwindigkeit größer wird.

6. Verfahren nach einem der Ansprüche 1 bis 5, **dadurch gekennzeichnet, dass** die Erstreckung des Beobachtungsbereichs (5), insbesondere die Erstreckung des Beobachtungsbereichs (5) hinter einer Hinterkante (6) des Eigenfahrzeuges (1), von der Differenz von einerseits der Geschwindigkeit (w) des Fahrzeugs (2) und andererseits der möglichen (vₘ) oder der aktuellen (vₐ) Geschwindigkeit des Eigenfahrzeuges (1) abhängig ist und mit zunehmender Differenz größer wird.

7. Verfahren nach einem der Ansprüche 1 bis 6, **dadurch gekennzeichnet, dass** die zweite Abfrage (A2), ob Fahrzeuge (2) seitlich vorhanden sind, die Aufnahme des Beobachtungsbereichs (5) seitlich des Eigenfahrzeuges (1) von zumindest einem Sensor (4) umfasst wird.

8. Verfahren nach Anspruch 7, **dadurch gekennzeichnet, dass** der zumindest eine Sensor (4) mit Ultraschall, mit Radar, mit einer Kameraaufnahme und/oder mit Laserscan den Beobachtungsbereich (5) seitlich des Eigenfahrzeuges (1) aufnimmt.

9. Verfahren nach einem der Ansprüche 7 oder 8, **dadurch gekennzeichnet, dass** der zumindest eine Sensor (4) Teil eines Spurwechselassistenten ist und vorzugsweise zur ersten Abfrage (A1) die Auswertungssoftware des Spurwechselassistenten benutzt wird.

10. Verfahren nach einem der Ansprüche 1 bis 9, **dadurch gekennzeichnet, dass** nach einer bestimmten Zeitspanne die erste Abfrage (A1) erneut durchgeführt wird, wobei die bestimmte Zeitspanne insbesondere 100 Millisekunden entspricht.

11. Verfahren nach einem der Ansprüche 1 bis 10, **dadurch gekennzeichnet, dass** nach einer bestimmten Zeitspanne die zweite Abfrage (A2) erneut durchgeführt wird, wobei die bestimmte Zeitspanne insbesondere 100 Millisekunden entspricht.

12. Verfahren nach einem der Ansprüche 1 bis 11, **dadurch gekennzeichnet, dass** zumindest ein vorausfahrendes Fahrzeug auf der aktuellen Fahrspur (F1) durch Sensoren erkannt und aufgenommen wird und ein Überholmanöver eingeleitet wird und eine Zielbeschleunigung zur Durchführung des Überholmanövers berechnet wird.

13. Eigenfahrzeug (1) zur Durchführung eines Verfahrens nach einem der Ansprüche 1 bis 12.

## Claims

1. Method for controlling an at least partially autonomously driving ego vehicle (1), wherein at least the surroundings, legal driving conditions and the traffic in front of the ego vehicle (1) in a current lane (F1) are detected by sensors (4), **characterised in that**
a. a first query (A1) is carried out about a possible increase in the speed (vₘ) while maintaining the current lane and a target acceleration is calculated when it is detected that the possible speed (vₘ) is greater than the current speed, and
b. a second query (A2) is carried out as to whether a vehicle (2) is located on an adjacent lane (F2) within an observation region (5), whether either an acceleration is carried out with the calculated target acceleration because no vehicle (2) was detected within the observation region (5) or whether no acceleration is carried out with the target acceleration because a vehicle (2) was detected within the observation region (5).

2. Method according to claim 1, **characterised in that** the observation region (5) extends more than 25 m laterally along the ego vehicle (1) in the left direction of travel or in the right direction of travel.

3. Method according to claim 1 or 2, **characterised in that** the observation region (5) extends in the direction of travel more than 25 m obliquely to the left or right behind a rear edge (6) of the ego vehicle (1).

4. Method according to one of claims 1 to 3, **characterised in that** the observation region (5) extends more than 25 m obliquely to the left or right in front of a leading edge (7) of the ego vehicle (1) in the direction of travel.

5. Method according to one of claims 1 to 4, **characterised in that** the observation region (5) is a region which is arranged laterally to the left or right of the ego vehicle (1) in the direction of travel, wherein the maximum extension of the observation region (5) is dependent on the permitted, the possible (vₘ) and/or the current (vₐ) speed of the ego vehicle (1) and/or the speed (w) of the vehicle (2) and becomes greater with increasing speed.

6. Method according to one of claims 1 to 5, **characterised in that** the extension of the observation region (5), in particular the extension of the observation region (5) behind a rear edge (6) of the ego vehicle (1), is dependent on the difference between, on the one hand, the speed (w) of the vehicle (2) and, on the other hand, the possible (vₘ) or the current (vₐ) speed of the ego vehicle (1) and becomes greater as the difference increases.

7. Method according to one of claims 1 to 6, **characterised in that** the second query (A2) as to whether vehicles (2) are present laterally, the recording of the observation region (5) laterally of the ego vehicle (1) is comprised by at least one sensor (4).

8. Method according to claim 7, **characterised in that** the at least one sensor (4) records the observation region (5) laterally of the ego vehicle (1) with ultrasound, with radar, with a camera recording and/or with laser scanning.

9. Method according to one of claims 7 or 8, **characterised in that** the at least one sensor (4) is part of a lane change assistant and preferably the evaluation software of the lane change assistant is used for the first query (A1).

10. Method according to one of claims 1 to 9, **characterised in that** the first query (A1) is performed again after a certain period of time, wherein the certain period of time corresponds in particular to 100 milliseconds.

11. Method according to one of claims 1 to 10, **characterised in that** the second query (A2) is performed again after a certain period of time, wherein the certain period of time corresponds in particular to 100 milliseconds.

12. Method according to one of claims 1 to 11, **characterised in that** at least one vehicle driving ahead in the current lane (F1) is detected and picked up by sensors and an overtaking maneuver is initiated and a target acceleration for carrying out the overtaking maneuver is calculated.

13. Ego vehicle (1) for carrying out a method according to one of claims 1 to 12.

## Revendications

1. Procédé de commande d'un propre véhicule (1) à circulation au moins en partie autonome, des capteurs (4) détectant au moins l'environnement, les conditions de circulation réglementaires et la circulation en amont du véhicule propre (1) dans le couloir de circulation actuel (F1),
procédé **caractérisé en ce que**
a. on effectue une première interrogation (A1) concernant une augmentation possible de la vitesse (vₘ) dans le couloir de circulation actuel et on calcule une accélération cible si l'on reconnaît que la vitesse possible (vₘ) est supérieure à la vitesse actuelle, et
b. on effectue une seconde interrogation (A2) pour savoir si un véhicule (2) se trouve dans un couloir de circulation voisin (F2) dans une zone d'observation (5) pour accélérer avec l'accélération cible, calculée, car aucun véhicule a été détecté dans la zone d'observation (5) soit ne pas accélérer avec l'accélération cible si un véhicule (2) a été détecté dans la zone d'observation (5).

2. Procédé selon la revendication 1,
**caractérisé en ce que**
la zone d'observation (5) s'étend à gauche dans le sens de circulation ou à droite dans le sens de circulation sur plus de 25m latéralement le long du propre véhicule (1).

3. Procédé selon la revendication 1 ou 2,
**caractérisé en ce que**
la zone d'observation (5) s'étend dans le sens de circulation sur plus de 25m en biais vers la gauche ou vers la droite, derrière côté arrière (6) du propre véhicule (1).

4. Procédé selon l'une des revendications 1 à 3,
**caractérisé en ce que**
la zone d'observation (5) s'étend dans le sens de circulation sur plus de 25m en biais vers la gauche ou vers la droite, devant le côté avant (7) du propre véhicule (1).

5. Procédé selon l'une des revendications 1 à 4,
**caractérisé en ce que**
la zone d'observation (5) se trouve dans une zone qui est selon le sens de circulation, sur le côté à gauche ou sur le côté droit du propre véhicule (1), l'extension maximale de la zone d'observation (5) dépendant de la vitesse autorisée, de la vitesse possible (vₘ) et/ou de la vitesse actuelle (vₐ) du propre véhicule (1) et/ou de la vitesse (w) du véhicule (2) et augmente avec l'augmentation de la vitesse.

6. Procédé selon l'une des revendications 1 à 5,
**caractérisé en ce que**
l'extension de la zone d'observation (5), notamment l'extension de la zone d'observation (5) derrière le côté arrière (6) du propre véhicule (1) dépend de la différence entre d'une part la vitesse (w) du véhicule (2) et d'autre part, de la vitesse possible (vₘ) ou de la vitesse actuelle (vₐ) du propre véhicule (1) et elle augmente avec la différence.

7. Procédé selon l'une des revendications 1 à 6,
**caractérisé en ce que**
la seconde interrogation (A2) pour savoir s'il y a latéralement des véhicules (2), est traitée par la saisie de la zone d'observation (5) latéralement du propre véhicule (1) avec au moins un capteur (4).

8. Procédé selon la revendication 7,
**caractérisé en ce que**
au moins un capteur (4) saisit latéralement par rapport au propre véhicule (1), par ultrasons, radar, prise de caméra et/ou par balayage laser de la zone d'observation (5).

9. Procédé selon l'une des revendications 7 ou 8,
**caractérisé en ce que**
au moins le capteur (4) fait partie d'un assistant de changement de voie et de préférence pour la première interrogation (A1), on utilise le programme d'exploitation de l'assistant de changement de voie.

10. Procédé selon l'une des revendications 1 à 9,
**caractérisé en ce que**
après une durée déterminée, on renouvelle la première interrogation (A1), cette durée prédéterminée correspondant notamment à 100 milli secondes.

11. Procédé selon l'une des revendications 1 à 10,
**caractérisé en ce que**
après une durée prédéterminée, on renouvelle la seconde interrogation (A2), cette durée prédéterminée correspondant notamment à 100 milli secondes.

12. Procédé selon l'une des revendications 1 à 11,
**caractérisé en ce que**
on reconnaît au moins un véhicule en amont dans le couloir actuel fin de circulation (F1) par les capteurs, on le saisit, on lance une manœuvre de dépassement et on calcule une accélération cible pour effectuer la manoeuvre de dépassement.

13. Propre véhicule (1) pour la mise en oeuvre d'un procédé selon l'une des revendications 1 à 12.
